# EUROPÄISCHE PATENTSCHRIFT

(11) **EP 2 548 775 B1**
(45) Veröffentlichungstag und Bekanntmachung des Hinweises auf die Patenterteilung: **30.10.2019**
(21) Anmeldenummer: 12001369.3
(22) Anmeldetag: 01.03.2012
(51) Int. Cl.: B60T 1/10, B60T 10/04, B60K 6/12

(54) **Fahrzeug mit einem Hochdruckspeicher**
Vehicle with a high-pressure storage device
Véhicule doté d'un accumulateur haute pression

(30) Priorität: 20.07.2011 DE 102011108111
(43) Veröffentlichungstag der Anmeldung: 23.01.2013
(73) Patentinhaber: MAN Truck & Bus SE, 80995 München (DE)
(72) Erfinder: Blumenthal, Torsten, 85244 Röhrmoos (DE)
(74) Vertreter: Liebl, Thomas

(56) Entgegenhaltungen:
- WO-A1-2004/026607
- WO-A1-2006/055978
- DE-A1-102008 047 988
- GB-A- 2 410 476
- US-A1- 2004 173 396

## Beschreibung

Die Erfindung betrifft ein Fahrzeug mit einem Hochdruckspeicher nach dem Oberbegriff des Patentanspruchs 1.

Es sind insbesondere Nutzfahrzeuge bekannt, die den einzelnen Antriebsrädern zugeordnete Hydraulikmotoren besitzen, welche mittels eines von einer Hydraulikpumpe gelieferten Volumenstroms angetrieben werden. Die Hydraulikmotoren können hierfür in den Radnaben der Antriebsräder angeordnet sein.

Aus der US-Patentschrift 4 246 978 ist ein Nutzfahrzeug mit mehreren den einzelnen Antriebsrädern zugeordneten Hydraulikmotoren bekannt. Eine Hydraulikpumpe wird mittels eines Elektromotors angetrieben und liefert einen Volumenstrom zu den Hydraulikmotoren. Zusätzlich ist ein Hochdruckspeicher an die von der Hydraulikpumpe zu den Hydraulikmotoren führende Hydraulikleitung angeschlossen. Mittels eines Ventils kann die hydraulische Verbindung zwischen Hochdruckspeicher und der genannten Hydraulikleitung gesperrt werden. Im Schubbetrieb pumpen die Hydraulikmotoren einen Volumenstrom in den Hochdruckspeicher, wodurch eine Speicherung von Bremsenergie möglich ist. Beim Beschleunigen des Fahrzeugs kann die im Hochdruckspeicher gespeicherte Bremsenergie zum Antreiben der Hydraulikmotoren genutzt werden. Sobald ein unterer Druckgrenzwert im Hochdruckspeicher erreicht ist, wird auf den Antrieb mittels der elektromotorisch betriebenen Hydraulikpumpe umgeschaltet.

Die DE 10 2008 047 988 A1 zeigt einen Antriebsstrang mit einem Druckspeicher, in das ein Hydraulikmotor zur Speicherung von Bremsenergie einen Volumenstrom einspeist. Zur Unterstützung des Fahrzeugantriebs kann über den Druckspeicher der Hydraulikmotor angetrieben werden.

Aus der WO 2004/026607 A1 ist ein weiteres Antriebssystem mit einem Druckspeicher bekannt, bei dem der Volumenstrom von einer Hydraulikpumpe in einen Vorratsbehälter umgeleitet wird, wenn im Druckspeicher eine Grenzdruckwert erreicht ist.

Der Erfindung liegt die Aufgabe zugrunde, ein Fahrzeug mit einem Hochdruckspeicher zur Speicherung von Bremsenergie so auszubilden, dass mittels eines vorgesehenen Hydraulikmotors auch bei lang andauernden Bremsvorgängen eine stufenlose Regelung des Retarderbremsmoments bereitgestellt werden kann.

Die Aufgabe ist durch die Merkmale des Patentanspruchs 1 gelöst. Eine bevorzugte Weiterbildung der Erfindung ist Gegenstand des Unteranspruchs 2.

Erfindungsgemäß ist wenigstens ein Hydraulikmotor vorgesehen, der im Schubbetrieb einen regelbaren hydraulischen Volumenstrom über ein Steuermodul wahlweise in den Hochdruckspeicher oder in einen Vorratsbehälter fördert. Der Volumenstrom ist mittels eines steuerbaren Drosselventils regelbar, so dass im Schubbetrieb der Hydraulikmotor ein Retarderbremsmoment erzeugt, welches ein gezieltes Abbremsen der Antriebsräder und damit des Fahrzeugs ermöglicht.

Im Schubbetrieb hat der Hydraulikmotor die Funktion einer Hydraulikpumpe und fördert einen drosselbaren Volumenstrom zunächst in den Hochdruckspeicher, bis dieser einen maximalen Druckgrenzwert erreicht hat. Ab Erreichen des Druckgrenzwertes fördert der Hydraulikmotor den Volumenstrom über das Steuermodul in einen Vorratsbehälter, wobei das gewünschte Retarderbremsmoment weiterhin durch eine entsprechende Drosselung des Volumenstroms bereitgestellt wird.

Ein beispielsweise im Antriebsstrang eines Fahrmotors angeordneter Hydraulikmotor kann vom Hochdruckspeicher mit einem Volumenstrom beaufschlagt werden, um den Fahrmotor des Fahrzeugs beim Beschleunigen zu unterstützen. Somit kann die gespeicherte Bremsenergie beim Vortrieb zur Erzeugung einer Boost-Funktion (Verstärkungsfunktion) eingesetzt werden.

Das im Steuermodul verwendete Drosselventil ist als Proportionalventil ausgebildet, mit dem eine veränderliche Regelung des Volumenstroms möglich ist. Mittels des Proportionalventils lässt sich eine stufenlose Regelung des Retarderbremsmoments realisieren.

Der im Schubbetrieb bei maximal gefülltem Hochdruckspeicher vom Steuermodul zum Vorratsbehälter geleitete Volumenstrom durchläuft vorzugsweise ein Kühlsystem, um die Hydraulikflüssigkeit abzukühlen, bevor diese in den Vorratsbehälter gelangt. Als Kühlsystem kann hierfür das Kühlsystem eines Fahrmotors verwendet werden, wobei der Fahrmotor ein herkömmlicher Dieselmotor oder allgemein ein Verbrennungsmotor sein kann.

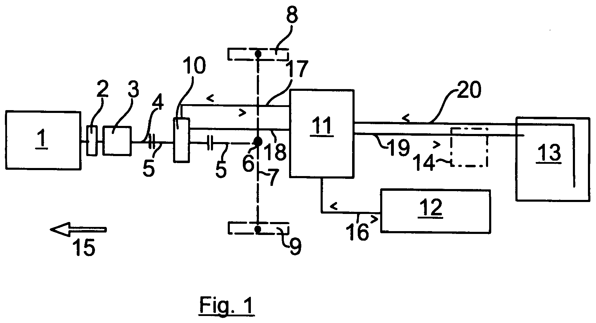

Die Erfindung wird nachfolgend anhand eines in der Figur 1 dargestellten Ausführungsbeispiels näher erläutert.

Figur 1 zeigt die schematische Darstellung des Fahrantriebs eines Fahrzeugs mit einem Fahrmotor 1, der über eine Kupplung 2 und ein Schaltgetriebe 3 eine Gelenkwelle 4 antreibt. Die Gelenkwelle 4 ist Teil eines Gelenkwellenstrangs 5, der über einen mittleren Achsantrieb 6 die Hinterachse 7 und damit die Antriebsräder 8, 9 antreibt. Der Fahrmotor 1 kann als Verbrennungsmotor ausgebildet sein.

Im Gelenkwellenstrang 5 ist ein Hydraulikmotor 10 angeordnet, dessen Antriebswelle ebenfalls Teil des Gelenkwellenstangs 5 ist. Das zum Betrieb des Hydraulikmotors 10 vorgesehene Hydrauliksystem ist vergrößert dargestellt und besteht im Wesentlichen aus einem Steuermodul 11 einem Hochdruckspeicher 12 und einem Vorratsbehälter 13. Mit strichpunktierter Linie ist ein Kühlsystem 14 angedeutet.

Bewegt sich das Fahrzeug in Fahrtrichtung 15 und soll der Antrieb des Fahrmotors 1 dabei vom Hydraulikmotor 10 unterstützt werden, so schaltet das Steuermodul 11 die vom Hochdruckspeicher 12 zum Steuermodul 11 führende Hydraulikleitung 16 auf die zum Hydraulikmotor 10 führende Vorlaufleitung 17 durch. Gleichzeitig gelangt dabei der vom Hydraulikmotor 10 zurückgeführte Volumenstrom über eine Rücklaufleitung 18 und über das Steuermodul 11 zu einer zum Vorratsbehälter 13 führenden Rücklaufleitung 19. Wird bei dieser Antriebsunterstützung der maximal mögliche Volumenstrom vom Hochdruckspeicher 12 für den Antrieb des Hydraulikmotors 10 verwendet, so erhält man dadurch die maximale Erhöhung des Antriebsmoments im Gelenkwellenstrang 5.

Das Steuermodul kann aber auch eine begrenzte bzw. gedrosselte Weiterleitung des Volumenstroms aus dem Hochdruckspeicher 12 zum Hydraulikmotor 10 vornehmen, falls nur eine reduzierte Antriebsunterstützung erfolgen soll. In jedem Fall ist eine Antriebsunterstützung natürlich nur so lange mittels des Hydraulikmotors 10 möglich, wie im Hochdruckspeicher 12 ein ausreichender Überdruck zur Bereitstellung eines entsprechenden Volumenstroms vorhanden ist.

Im Schubbetrieb arbeitet der Hydraulikmotor 10 als Hydraulikpumpe, die vom Gelenkwellenstang 5 angetrieben wird. Im Schubbetrieb wird über das Steuermodul 11 ein Volumenstrom über die Hydraulikleitung 16 in den Hochdruckspeicher 12 so lange eingespeist, bis dort ein vorgegebener maximaler Druckwert erreicht ist. Mit Erreichen des maximalen Druckwerts im Hochdruckspeicher 12 schaltet das Steuermodul im Schubbetrieb den vom Hydraulikmotor 10 gelieferten Volumenstrom auf die zum Vorratsbehälter 13 führende Rücklaufleitung 19 um. Somit gelangt dann im Schubbetrieb bei vollem Hochdruckspeicher 12 der aus dem Vorratsbehälter 13 über eine Ansaugleitung 20 zum Hydraulikmotor 10 angesaugte Volumenstrom über die Rücklaufleitungen 18, 19 wieder in den Vorratsbehälter 13. Das Kühlsystem 14 kann dabei eine Abkühlung des Volumenstroms vornehmen, bevor dieser in den Vorratsbehälter 13 gelangt.

Im Steuermodul 11 kann zur Drosselung des Volumenstroms im Schubbetrieb ein Drosselventil bzw. ein Proportionalventil verwendet werden, dessen Drosselfunktion sich in Abhängigkeit von Fahrbetriebsparametern steuern lässt. Durch Steuerung der Drosselstärke kann ein gewünschtes Retarderbremsmoment im Schubbetrieb mittels des Hydraulikmotors 10 am Gelenkwellenstang 5 erzeugt werden. Andererseits kann beim Beschleunigen eine gewünschte Erhöhung des Antriebsmoments über den Hydraulikmotor 10 auf den Gelenkwellenstrang 5 übertragen werden.

Die Bereitstellung eines Retarderbremsmoments ist in der anhand des Ausführungsbeispiels beschriebenen Weise auch für Fahrzeuge geeignet, die den einzelnen Antriebsrädern zugeordnete Hydraulikmotoren besitzen, welche mittels eines von einer Hydraulikpumpe gelieferten Volumenstroms angetrieben werden. Beim Bremsen arbeiten auch hier die Hydraulikmotoren als Hydraulikpumpen, deren Volumenstrom gemäß der Erfindung wahlweise in den Hochdruckspeicher oder den Vorratsbehälter über ein steuerbares Drosselventil geleitet werden kann.

## Patentansprüche

1. Fahrzeug mit einem Hochdruckspeicher (12), in den ein Hydraulikmotor (10) zur Speicherung von Bremsenergie im Schubbetrieb einen Volumenstrom einspeist, wobei zur Unterstützung des Fahrzeugantriebs vom Hochdruckspeicher (12) ein Volumenstrom den Hydraulikmotor (10) antreibt und der Hydraulikmotor (10) im Schubbetrieb zur Erzeugung eines Retarderbremsmoments einen hydraulischen Volumenstrom über ein Steuermodul (11) wahlweise in den Hochdruckspeicher (12) oder in einen Vorratsbehälter (13) fördert, **dadurch gekennzeichnet, dass** zur veränderlichen Regelung des Volumenstroms im Schubbetrieb ein Proportionalventil, dessen Drosselfunktion in Abhängigkeit von Fahrbetriebsparametern steuerbar ist, im Steuermodul (11) integriert ist.

2. Fahrzeug nach Anspruch 1, **dadurch gekennzeichnet, dass** der im Schubbetrieb in den Vorratsbehälter (13) geleitete Volumenstrom ein zwischen Steuermodul (11) und Vorratsbehälter (13) angeordnetes Kühlsystem (14) durchströmt.

## Claims

1. Vehicle having a high pressure accumulator (12), into which a hydraulic motor (10) feeds a volume flow for storing braking energy in overrun operation, a volume flow from the high-pressure accumulator (12) driving the hydraulic motor (10) in order to assist the vehicle drive and the hydraulic motor (10) optionally delivering a hydraulic volume flow via a module (11) into the high-pressure accumulator (12) or into a storage container (13) in order to produce a retarder braking torque in overrun operation, **characterized in that** a proportional valve, the throttling function of which can be controlled as a function of driving operation parameters, is integrated in the control module (11) for the variable control of the volume flow in overrun operation.

2. Vehicle according to Claim 1, **characterized in that** the volume flow led into the storage container (13) in overrun operation flows through a cooling system (14) arranged between control module (11) and storage container (13).

## Revendications

1. Véhicule équipé d'un accumulateur haute pression (12) dans lequel un moteur hydraulique (10) injecte un débit volumique afin d'accumuler de l'énergie de freinage lors du fonctionnement en poussée, dans lequel un débit volumique entraîne le moteur hydraulique (10) pour assister l'entraînement du véhicule à partir de l'accumulateur haute pression (12), et le moteur hydraulique (10), lors du fonctionnement en poussée, délivre de manière sélective un débit volumique hydraulique par l'intermédiaire d'un module de commande (11) vers l'accumulateur haute pression (12) ou vers un réservoir de stockage (13) afin de générer un couple de freinage ralentisseur, **caractérisé en ce qu'**une vanne proportionnelle, dont la fonction d'étranglement peut être commandée en fonction de paramètres de fonctionnement de conduite, est intégrée dans le module de commande (11) pour réguler de manière variable le débit volumique lors du fonctionnement en poussée.

2. Véhicule selon la revendication 1, **caractérisé en ce que** le débit volumétrique qui est guidé vers le réservoir de stockage (13) lors du fonctionnement en poussée passe à travers un système de refroidissement (14) disposé entre le module de commande (11) et le réservoir de stockage (13).
